# EUROPÄISCHE PATENTSCHRIFT

(11) **EP 1 727 996 B1**
(45) Veröffentlichungstag und Bekanntmachung des Hinweises auf die Patenterteilung: **02.02.2011**
(21) Anmeldenummer: 05729055.3
(22) Anmeldetag: 18.03.2005
(51) Int. Cl.: F16C 33/38

(54) **KÄFIG FÜR SCHRÄGKUGELLAGER**
CAGE FOR INCLINED BALL BEARING
LOGEMENT POUR ROULEMENT A BILLES A CONTACT OBLIQUE

(30) Priorität: 20.03.2004 DE 102004013802
(43) Veröffentlichungstag der Anmeldung: 06.12.2006
(73) Patentinhaber: Schaeffler Technologies GmbH & Co. KG, 91074 Herzogenaurach (DE)
(72) Erfinder: FELIS, Norbert, 97422 Schweinfurt (DE); HÄPP, Alexander, 97461 Lendershausen (DE)
(86) Internationale Anmeldenummer: PCT/DE2005/000504
(87) Internationale Veröffentlichungsnummer: WO 2005/090809

(56) Entgegenhaltungen:
- DE-A1- 3 917 128
- US-A1- 2001 036 329

## Beschreibung

### Gebiet der Erfindung

Die Erfindung betrifft einen Käfig für Schrägkugellager mit zueinander benachbarten und durch Stege voneinander abgegrenzten Kugeltaschen, wobei aus den Stegen Haltenasen hervorgehen.

### Hintergrund der Erfindung

Ein derartiger Käfig ist in US 6,447,169 B2 beschrieben. Typische Beispiele zur Fertigung derartiger Käfige herangezogener Werkstoffe sind mit Glas oder mit Kohlefasern verstärkte Polyamide (z.B. PA66/GF). Der Käfig weist in diesem Fall zwei durch Stege miteinander verbundene Seitenborde auf. Einer der Seitenborde ist auf der einen Seite des Käfigs oberhalb und ein anderer der Seitenborde unterhalb des Teilkreises angeordnet.

Diese Haltenasen sind in der Regel an einem der Seitenborde oder, wie in dem betrachteten Beispiel nach US 6,447,169 B2, an den Stegen ausgebildet und stehen in radiale Richtung über den Bord oder über die Seltenwände aus dem Käfig hervor. Die Haltenasen greifen in eine entsprechende Ringnut eines der Lagerringe des Schrägkugellagers ein. Über die Haltenasen sind die Käfige, zusammen mit den Kugeln und dem entsprechenden Lagerring, zu einer Baueinhelt vormontiert, an dem Lagerring gehalten. Derartige Haltenasen sind auch für eine axiale Wegbegrenzung des Käfigs in einem Lager geeignet.

Aus DE 39 1728 A1, von der im Oberbegriff des Anspruchs 1 ausgegangen wird, ist ein Doppelkammkäfig für ein zweireihiges Kugellager bekannt, der Haltenasen mit Vorsprüngen aufweist, wobei die Haltenasen In zwei Vorsprünge gespalten sind und Flanken aufweisen, die in entgegengesetzte Richtungen weisen sowie aufeinander zugeneigt sind. Die Haltenasen sind zur axialen Führung des Doppelkammkäfigs vorgesehen.

Aus US 2001/0 0 36 329 A1 geht ein zweiteillger Doppolkammkäfig für ein zweireihiges Kugellager hervor, dessen Haltenasen ebenfalls zur axialen Sicherung des Doppelkammkäfigs vorgesehen sind.

Bei der Montage des Käfigs auf/in den Lagerring federn die Haltenasen solange elastisch entweder ein oder auf, bis die Haltenasen in eine entsprechende Ringnut des Lagerringes einschnappen. In dem Bereich, an dem bei dieser Montage die höchsten Biegemomente an den Haltenasen entstehen, müssen die Halternasen stabil genug sein, um beim Aufschieben auf den Lagerring sich nicht bleibend zu verformen oder zu brechen. Deshalb nimmt der Materialquerschnitt der Haltenasen an Käfigen nach dem Stand der Technik, von dem freien Ende der Haltenasen aus gesehen, mit abnehmender Entfernung zu den Stegen hin zu. An sich sind deshalb Haltenasen, die bei geringen Abmessungen relativ große Querschnitte aufweisen, für die Stabilität der Haltenasen von Vorteil. Die in dem betrachteten Stand der Technik beschriebenen Haltenasen sind deshalb vergleichsweise klein und kompakt ausgebildet.

Bei der Montage der Käfige auf/in den Lagerring sind große Querschnitte dagegen nachteilig, da die Montagekräfte zum Aufschieben, z.B. auf einen Innenring, gegen den Widerstand beim Auffedern der Haltenasen hoch sind. Außerdem sind die Haltenasen dann nicht elastisch genug ausgebildet und aufgrund der hohen Montagekräfte und trotz der kompakten Ausführung leicht zu beschädigen.

Den Abmessungen der Haltenasen sind Im Schrägkugellager Grenzen gesetzt, da nur wenig Bauraum zwischen den Lagerringen des Schrägkugellagers zur Verfügung steht.

Die Formwerkzeuge für die Herstellung der Käfige sind relativ kompliziert ausgeführt. Es wird sich bemüht, die Geometrie der Haltenasen so einfach wie möglich zu gestalten. Deshalb sind an Käfigen nach dem Stand der Technik, fertigungstechnisch bedingt, z.B. die in Umfangsrichtung gewandten Flanken(flächen) ein jeder der Haltenasen parallel zueinander ausgerichtet.

Häufig werden die Käfige bei einer automatisierten Montage der Käfige mittels Greifern aufgenommen und bewegt. Die Haltenasen sind dabei oft Hilfsmittel, an denen die Käfige mittels der Greifer gegriffen werden. Hier wiederum sind auch Haltenasen mit wenig Angriffsfläche aus verhältnismäßig kleinen Abmessungen für die Greifer nachteilig.

Den vorgenannten Anforderungen an die Stabilität der Käfige und deren Haltenasen steht die Forderung nach geringem Materialeinsatz bei deren Herstellung entgegen. Material zur Herstellung des Käfigs kann gespart werden, wenn der Käfig im allgemeinen geringe Materialquerschnitte aufweist und somit dünnwandig ausgebildet ist. Außerdem sollten die Querschnitte und insbesondere Übergänge, z.B. vom Steg zu den Borden, aus fertigungstechnischen Gründen gleichmäßig sein.

Der Dünnwandigkeit sind durch die Anforderungen an eine hohe Betriebsfestigkeit des Käfigs Grenzen gesetzt. Wenn die Querschnitte an Borden oder Seitenwänden zu gering sind, ist zu befürchten, dass Verformungen der Haltenasen auf die Borde/Seitenwände übertragen werden und diese brechen oder plastisch verformt werden. Im Übrigen sind dünnwandige Kunststoffteile nach dem Entformen aus dem Werkzeug äußerst instabil und verlieren häufig beim danach weiterfolgenden Abkühlen und während der Lagerung ihre bestimmungsgemäße Form bzw. Geometrie.

Die vorgenannten und sich widersprechenden Anforderungen erschweren die optimale Auslegung von Käfigen mit Haltenasen.

### Zusammenfassung der Erfindung

Die Aufgabe der Erfindung ist es daher, einen Käfig zu schaffen, der den vorgenannten und sich teils entgegenstehenden Forderungen an die Herstellbarkeit, an die kostengünstige Herstellung und an die Funktion optimal gerecht wird.

Diese Aufgabe ist gemäß dem Gegenstand des kennzeichnenden Teiles des Anspruches 1 gelöst. In eine oder beide axiale Richtungen des Käfigs sind die Kugeltaschen jeweils von einer Seitenwand und von einem gemeinsamen Bord bzw. beidseitig durch einen Bord begrenzt. Die Seitenwände und/oder Borde weisen vorzugsweise annähernd gleichmäßige Wanddicken auf. Jede der Seitenwände oder jeder der Borde verbindet zwei einander gegenüberliegende Stege umfangsseitig miteinander.

Aus den Stegen gehen in Richtung des Außenringes oder in Richtung des Innenringes Haltenasen, z.B. für das axiale Sichern des Käfigs in einer Ringnut eines Innen/Außenringes des Schrägkugellagers, hervor. Die Haltenasen sind umfangsseitig jeweils zu weiteren der Haltenasen benachbart.

Die zueinander weisenden benachbarten Flanken der Haltenasen sind so zueinander geneigt, dass die Flanken an einer Haltenase und die einander zugewandten Flanken benachbarter Haltenasen aufeinander zu geneigt sind.

Jede der Haltenasen ist dabei umfangsseitig von einer weiteren der Haltenasen durch eine Umfangslücke getrennt. Die zur Umfangslücke weisenden Flanken einander benachbarter Haltenasen nähern sich, in mit zunehmender Entfernung vom Steg aus betrachtet sowie mit abnehmender Entfernung zur Rotationsachse, einander. Somit verringert sich die lichte Weite der Umfangslücke, zwischen den sich an der Lücke einander gegenüberliegenden Flanken vom Steg aus gesehen, in Richtung der freien Enden der Haltenasen. Die Haltenasen verbreitern sich demnach in die Richtung ihres freien Endes. Gleichzeitig verringert sich vorzugsweise die Höhe der Haltenasen mit zunehmender Breite. Die Haltenasen sind dadurch insbesondere in dem Bereich, in dem beim Verschnappen mit dem Lagerring größte Biegemomente auftreten, stabil und in Richtung des freien Endes zunehmend elastisch gestaltet.

Die Haltenasen sind elastisch, weil diese, im Gegensatz zur kompakten Ausführung nach dem Stand der Technik, geringe Materialquerschnitte aufweisen und relativ lang sind. Das Verhältnis von kleinster Länge der Haltenasen (kleinster Abstand von der Spitze des freies Endes der Haltenasen in Richtung des dieser Spitze am nächsten liegenden Überganges in den Steg) zu der größten Höhe nicht kleiner sein als 2 . 1 sondern eher größer. Elastisch nachgiebige Haltenasen erleichtern aufgrund geringer Montagekräfte die Montage des Käfigs auf den Lagerring.

Eine Ausgestaltung der Erfindung sieht vor, dass die umfangsseitig einander zugewandten Flanken durch zur Umfangslücke gewandte gerade Kanten oder durch ebene Flächen beschrieben sind. Die Flanken sind dabei um einem Winkel zu einer gedachten sowie die Rotationsachse senkrecht schneidenden Geraden und/oder zu einer von der Rotationsachse ausgehenden sowie mit der Rotationsachse des Schrägkugellagers gleichgerichteten Ebene geneigt. Die Gerade liegt in der Ebene. Die Flanken einander benachbarter Haltenasen und die beiden Flanken an den jeweiligen Haltenasen sind vorzugsweise mit einem spitzen Winkel von 20° zu der Ebene/Gerade geneigt. So schließen die einander an den Umfangslücken zugewandten Flanken der jeweiligen Haltenase vorzugsweise einen Winkel von 40° zwischen sich ein.

Nach einer Ausgestaltung der Erfindung nimmt Flächeninhalt jeder beliebigen Querschnittsfläche der Haltenase im Vergleich zu dem Flächeninhalt weiterer, einzelner sowie über die gesamte Länge der jeweiligen Halternase zueinander beanstandeter Querschnittsflächen mit zunehmendem Abstand der jeweiligen Querschnittsfläche von der Rotationsachse ab. Diese Flächeninhalte können jedoch von Querschnitt zu Querschnitt durch andere Breiten und Höhen vorgegeben sein. Es wird allerdings angestrebt, die Höhe der Haltenasen von Querschnitt zu Querschnitt bis an den Übergang der Haltenase in den Steg möglichst konstant zu halten bzw. nur geringfügig zu ändern. Dabei ist nach einer Ausgestaltung der Erfindung das Verhältnis von kleinster Breite der Haltenasen zu größter Höhe nicht kleiner 2,5 :1.

Die Haltenasen gehen vorzugsweise zunächst zwischen Steg und Rotationsachse von den Stegen ab, und weisen dann schräg in Richtung der Rotationsachse. Die Haltenasen gehen somit an der Basis der Stege ab, die nach innen zur Rotationsachse des Schrägkugellagers gewandt ist. Dabei ist der Querschnitt der Stege an diesem Übergang relativ groß, so dass die Stege steif sind. Die umfangsseitige oder tangentiale Abmessung der Stege ist mindestens genauso groß, wie die Haltenasen in diese umfangsseitigen oder tangentialen Richtungen breit sind. Dadurch geht das Material der Haltenasen nur an dem Steg in den Käfig über. Zwischen den Seitenwänden und den Haltenasen besteht nur eine Verbindung über den Steg. Der an dem Übergang relativ starre Steg verhindert, dass bei der Montage des Käfigs auf den Lagerring Verformungen der Schnappnasen nicht oder kaum auf die angrenzenden Seitenwände der Taschen übertragen werden. Beschädigungen der Tasche durch bleibende Verformungen oder Zerbrechen durch das Auf- bzw. Einfedern der Haltenasen werden vermieden. Seitenwände, Borde usw. können aus Gesichtspunkten der Materialökonomie dünnwandig gestaltet werden.

Die sich zu ihrem Ende hin tangential oder umfangsseitig verbreiternden Haltenasen bieten ausreichend Angriffsfläche für Greifer bei einer maschinellen Montage der Käfige auf den Lagerring.

Durch die Gestaltung der Haltenasen und deren Übergang in die Seitenwände kann der Käfig hinsichtlich des Materialverbrauches bei seiner Herstellung optimiert werden. Der Käfig weist wahlweise einen oder zwei Seitenborde auf. Bevorzugt ist ein Käfig, dessen Seitenwände von den Stegen aus zumindest in die axiale Richtung ausgewölbt und ohne Bord sind. Die Seitenwände stehen dabei in die axiale Richtung über die Stege hervor. Der axial hervorstehende Umkehrpunkt der Wölbungen steht axial am weitesten aus dem Käfig in die axiale Richtung hervor.

Der Käfig ist an zumindest einer Stirnseite zwischen den ausgewölbten Seitenwänden der Taschen jeweils mit einer umfangsseitig oder tangential ausgerichteten Rippe zwischen einzelnen Taschen versehen. Für die Herstellung des Käfigs wird weniger Material als für einen Käfig mit zwei Seitenborden eingesetzt und die funktionsbedingte Festigkeit ist über den Verbund von Rippen; Haltenasen und Seitenwänden gewährleistet.

Ein Bord begrenzt vorzugsweise die Taschen entgegengesetzt zu der Seite des Käfigs, an der die Seitenwände ausgebildet sind. Da üblicherweise bei Käfigen für Schrägkugellager der gattungsbildenden Art einer der Seitenborde radial unterhalb und einer der Seitenborde radial oberhalb des Teilkreises der Kugeln verläuft, ergibt sich für den vorgenannten Käfig, dass der kleinste radiale Abstand des Seitenbordes zur Rotationsachse des Käfigs größer ist, als der größte radiale Abstand der Seitenwände zur Rotationsachse.

Weitere Ausgestaltungen der Erfindung sind im Abschnitt detaillierte Beschreibung der Zeichnungen beschrieben.

### Kurze Beschreibung der Zeichnungen

Erfindung wird nachfolgend anhand eines Ausführungsbeispieles näher erläutert. Es zeigen im einzelnen:
- Figur 1: die Gesamtansicht eines Ausführungsbeispieles eines er- findungsgemäßen Käfigs,
- Figur 2: die Frontalansicht des Käfigs aus Figur 1 mit Pfeilrichtung,
- Figur 3: einen Längsschnitt durch den Käfig entlang der Linie III - III nach Figur 2,
- Figur 4: eine Teilansicht des Käfigs nach Figur 1, im Längsschnitt entlang der Linie IV - IV nach Figur 2
- Figur 5: das Detail Z aus Figur 3 stark vergrößert, wobei der Käfig in ein Schrägkugellager verbaut ist.

### Detaillierte Beschreibung der Zeichnungen

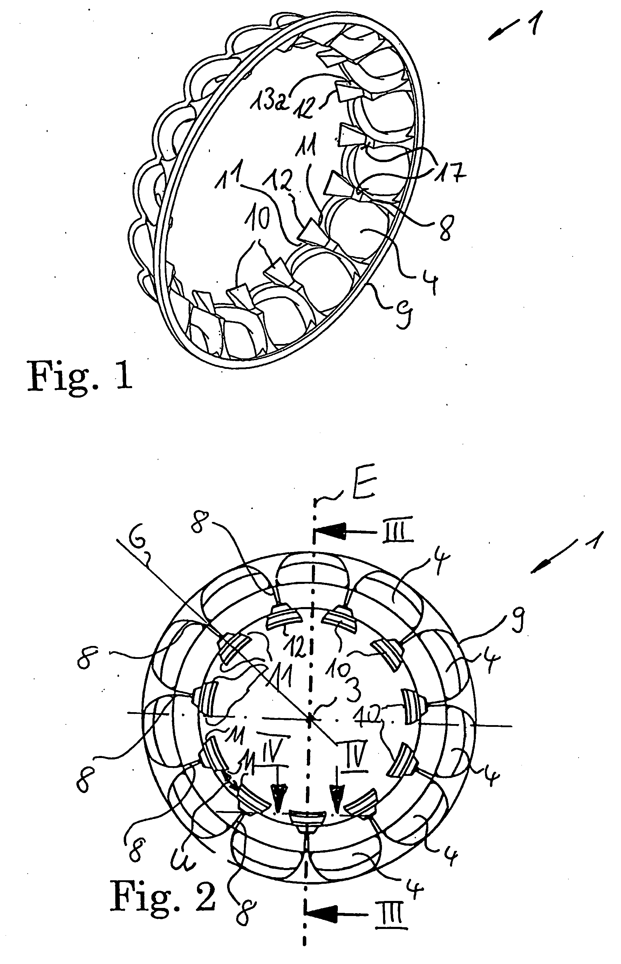

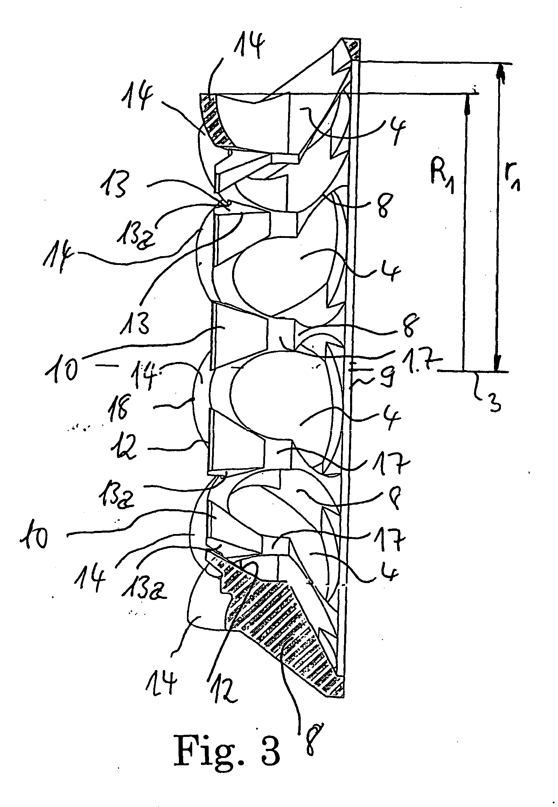

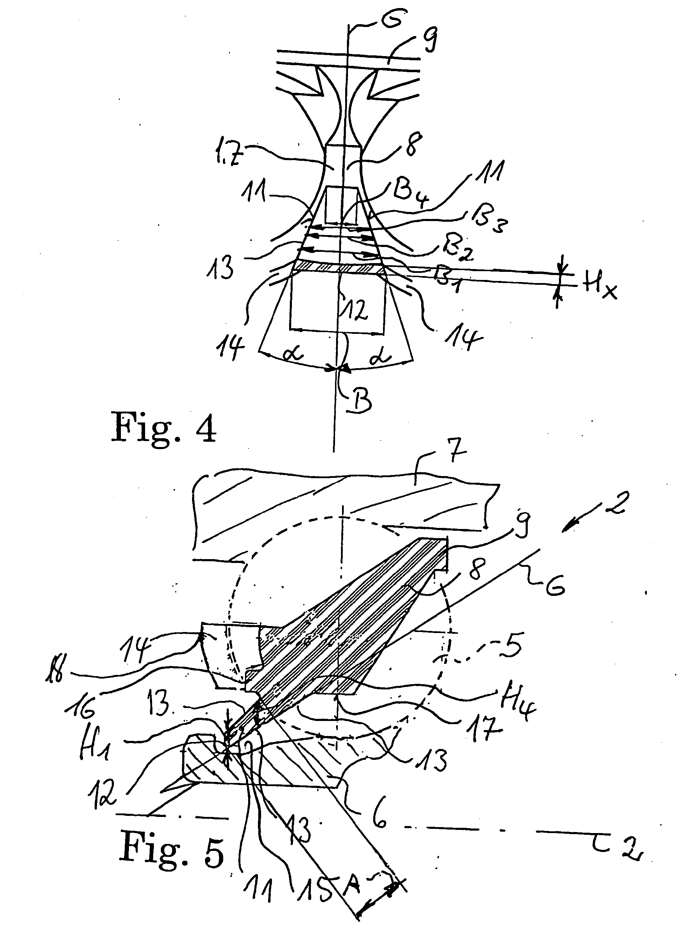

Die Figuren 1 und 2 zeigen einen Käfig 1 für ein Schrägkugellager 2. Ein Detail des Schrägkugellagers ist geschnitten in Figur 5 dargestellt. Der Käfig 1 weist umfangsseitig um seine Rotationsachse 3 zueinander mit gleichmäßiger Teilung benachbarte Kugeltaschen 4 auf. In jeder einzelnen der Kugeltaschen 4 ist eine Kugel 5 geführt. In Figur 5 ist der radial zwischen einem Innenring 6 und einem Außenring 7 angeordnete Käfig 1 mit Kugeln 5 dargestellt. Die Kugeltaschen 4 sind durch quer zur Umfangsrichtung verlaufende Stege 8 begrenzt. Wie insbesondere aus Figur 1, 3 und Figur 5 ersichtlich ist, erstrecken sich die Stege 8 von einem Seitenbord 9 aus zunächst geneigt in Richtung der Rotationsachse 3 und verlaufen dann in axiale Richtung.

Aus den Stegen 8 gehen Haltenasen 10 hervor. Die Haltenasen 10 sind elastisch nachgiebig gestaltet und sind mit umfangsseitig in entgegengesetzte Richtung weisenden sowie aufeinander zu geneigten Flanken 11 versehen. Die zur Rotationsachse 3 geneigt verlaufenden Haltenasen 10 werden von dem Steg 8 aus betrachtet in Richtung ihres freien Endes 12 tangential oder umfangsseitig breiter. Mit zunehmender Breite B - B₄ (Figur 4 und 5) nimmt gleichzeitig die radiale Höhe H -H₄ ab. Dabei nehmen die umfangsseitigen Abstände U (Figur 2) von einander gegenüberliegenden Flanken 11 einander benachbarter Haltenasen 10 in Richtung ihrer freien Enden 12 ab. Daraus folgt, dass der umfangsseitige Abstand der voneinander abgewandten Flanken 11 jeder der Haltenase 10 mit abnehmender Entfernung von der Rotationsachse 3 weg zunimmt. Das Verhältnis von A zu B ist 1 : 2,5 bis 1 : 3 (A = Länge der kürzesten der Körperkanten 13, an der die Haltenasen 10 in den Flächenabschnitt 17 des Steges 8 übergehen; B = größte tangentiale Breite der freien Enden).

Jede der Flanken 11 ist durch eine lange und eine kurze jeweils geradlinig verlaufende der Körperkante 13 beschrieben. In diesem Fall begrenzen die Körperkanten 13 Flächen 13a. Die Körperkanten 13 und somit die Flächen 13a sind um einem spitzen Winkel α zu einer gedachten von der Rotationsachse 3 ausgehenden sowie dabei mit der Rotationsachse 3 gleichgerichteten Ebene E und zu der in der Ebene E liegenden gedachten und dabei die Rotationsachse 3 schneidenden Geraden G geneigt.

Die Stege 8 weisen der Rotationsachse 3 zugewandte Flächenabschnitte 17 auf. Aus jedem der Flächenabschnitte 17 steht jeweils eine der Haltenasen 10 hervor. Die Halternasen 10 stehen höchstens soweit in die axiale Richtung am weitesten hervor, wie die Seitenwände 13 von dem Steg 8 aus in die axiale Richtung am weitesten hervorstehen. Die Haltenasen 10 greifen radial in eine Ringnut 15 des Innenringes 6 ein. Mittels der Haltenasen 10 ist der Käfig 1 axial mit Spiel an dem Innenring gesichert.

Die Kugeltaschen 4 sind von jeweils einer Seitenwand 14 mit annähernd gleichmäßiger Wanddicke begrenzt. Die Seitenwände 14 sind von den Stegen 8 aus zumindest in die axiale Richtung ausgewölbt. Jeweils eine Rippe 16 über einer Haltenase 10 geht in die axiale Richtung von jeweils einem der Stege 8 aus und verbindet zwei der Seitenwände 14 von umfangsseitig aufeinander folgenden Kugeltaschen 4 miteinander. Jede der Rippen 16 steht dabei in die axiale Richtung von dem Steg 8 höchstens so weit ab, wie die Seitenwände 14 in die axiale Richtung von dem Steg 8 aus in die axiale Richtung am Umkehrpunkt 18 ihrer Wölbung am weitesten hervorstehen, aber nicht weiter.

Der Seitenbord 9 begrenzt die Kugeltaschen 4 entgegengesetzt zu der axialen Richtung gegenüber den Seitenwänden. Der kleinste radiale Abstand r₁ des Seitenbordes 9 zur Rotationsachse 3 des Käfigs 1 ist größer, als der größte radiale Abstand R₁ der Seitenwände 14 zur Rotationsachse 3 hin.

### Bezugszeichen

- 1: Käfig
- 2: Schrägkugellager
- 3: Rotationsachse
- 4: Kugeltasche
- 5: Kugel
- 6: Innenring
- 7: Außenring
- 8: Steg
- 9: Seitenbord
- 10: Haltenase
- 11: Flanke
- 12: Ende
- 13: Körperkante
- 13a: Fläche
- 14: Seitenwand
- 15: Ringnut
- 16: Rippe
- 17: Flächenabschnitt
- 18: Umkehrpunkt

## Patentansprüche

1. Käfig (1) für Schrägkugellager (2) mit zueinander benachbarten und durch Stege (8) voneinander abgegrenzten Kugeltaschen (4), wobei aus den Stegen (8) elastisch nachgiebige Haltenasen (10) hervorgehen, die mit umfangsseitig in entgegengesetzte Richtung weisenden sowie aufeinander zu geneigten Flanken (11) versehen sind, wobei sich die Haltenase (10) in Richtung ihrer freien Enden verbreiten, **dadurch gekennzeichnet, dass** sich mit zunehmender Breite gleichzeitig die Höhe der Haltenasen (10) in Richtung ihrer freien Enden verringert.

2. Käfig nach Anspruch 1, **dadurch gekennzeichnet, dass** jede der Flanken (11) durch zumindest eine gerade Körperkante (13) beschrieben ist, wobei die Körperkante (13) um einen Winkel zu einer gedachten Ebene geneigt ist, wobei die Ebene von der Rotationsachse (3) des Käfigs (1) ausgeht und dabei mit der Rotationsachse (3) in axiale Richtung des Käfigs (1) gleichgerichtet ist.

3. Käfig nach Anspruch 2, **dadurch gekennzeichnet, dass** jede der Flanken (11) zu einer gedachten und dabei die Rotationsachse (3) schneidenden Geraden geneigt ist.

4. Käfig nach Anspruch 2, **dadurch gekennzeichnet, dass** der umfangsseitige Abstand von zwei voneinander abgewandten Flanken (11) an einer Haltenase (10) mit abnehmender radialer Entfernung von der Rotatlonsachse (3) zunimmt.

5. Käfig nach Anspruch 2, **dadurch gekennzeichnet, dass** die Flanken (11) ebene Flächen (13a) sind, wobei die Flächen (13a) mit einem spitzen Winkel zueinander geneigt sind.

6. Käfig nach Anspruch 1, **dadurch gekennzeichnet, dass** die Haltenasen (10) aus Flächenabschnltten (17) an den Stegen (8) hervorstehen, wobei die Flächenabschnitte (17) zur Rotationsachse (3) gewandt sind.

7. Käfig nach Anspruch 1, **dadurch gekennzeichnet, dass** jede der Kugeltaschen (4) wenigstens eine Seitenwand (14) mit annähernd gleichmäßiger Wanddicke aufweist, wobei die Seitenwände (14), von den Stegen (8) aus, zumindest in axiale Richtung ausgewölbt sind.

8. Käfig nach Anspruch 7, **dadurch gekennzeichnet, dass** die Halternasen (10) höchstens soweit in die axiale Richtung am weitesten hervorstehen, wie die Seitenwände (14) von dem Steg (8) aus in die axiale Richtung am weitesten hervorstehen.

9. Käfig nach Anspruch 1, **dadurch gekennzeichnet, dass** der Käfig (1) einen umfangsseitig umlaufenden Seitenbord (9) aufweist, wobei der Seitenbord (9) die Kugeltaschen (4) axial gegenüber den Seitenwänden (14) begrenzt.

10. Käfig nach Anspruch 9, **dadurch gekennzeichnet, dass** der kleinste radiale Abstand des Seitenbordes (9) zur Rotationsachse (3) des Käfigs (1) größer ist, als der größte radiale Abstand der Seitenwände (14) zur Rotationsachse (3).

## Claims

1. Cage (1) for inclined ball bearings (2) having ball pockets (4) which are adjacent to one another and are delimited from one another by webs (8), elastically resilient retaining lugs (10) protruding from the webs (8), which lugs are provided with flanks (11) which point in the opposite direction on the circumferential side and are inclined toward one another, the retaining lugs (10) widening in the direction of their free ends, **characterized in that**, as the width increases, at the same time the height of the retaining lugs (10) reduces in the direction of their free ends.

2. Cage according to Claim 1, **characterized in that** each of the flanks (11) is described by at least one straight body edge (13), the body edge (13) being inclined by an angle with respect to an imaginary plane, the plane emanating from the rotational axis (3) of the cage (1) and being aligned here with the rotational axis (3) in the axial direction of the cage (1).

3. Cage according to Claim 2, **characterized in that** each of the flanks (11) is inclined with respect to a straight line which is imaginary and intersects the rotational axis (3) here.

4. Cage according to Claim 2, **characterized in that** the circumferential spacing of two flanks (11) which face away from one another on a retaining lug (10) increases with decreasing radial distance from the rotational axis (3).

5. Cage according to Claim 2, **characterized in that** the flanks (11) are flat faces (13a), the faces (13a) being inclined at an acute angle with respect to one another.

6. Cage according to Claim 1, **characterized in that** the retaining lugs (10) protrude from face sections (17) on the webs (8), the face sections (17) facing the rotational axis (3).

7. Cage according to Claim 1, **characterized in that** each of the ball pockets (4) has at least one side wall (14) having an approximately uniform wall thickness, the side walls (14) being arched at least in the axial direction, starting from the webs (8).

8. Cage according to Claim 7, **characterized in that** the retaining lugs (10) protrude the furthest in the axial direction at most as much as the side walls (14) protrude the furthest in the axial direction, starting from the web (8).

9. Cage according to Claim 1, **characterized in that** the cage (1) has a side rim (9) which runs on the circumferential side, the side rim (9) delimiting the ball pockets (4) axially opposite the side walls (14).

10. Cage according to Claim 9, **characterized in that** the smallest radial spacing of the side rim (9) from the rotational axis (3) of the cage (1) is greater than the greatest radial spacing of the side walls (14) from the rotational axis (3).

## Revendications

1. Cage (1) pour roulement à billes à contact oblique (2) comprenant des cavités de billes (4) adjacentes les unes aux autres et séparées les unes des autres par des nervures (8), des nez de retenue (10) élastiquement flexibles dépassant hors des nervures (8) et étant pourvus de flancs (11) tournés du côté périphérique dans une direction opposée et inclinés l'un vers l'autre, les nez de retenue (10) s'élargissant dans la direction de leurs extrémités libres, **caractérisée en ce que** la hauteur des nez de retenue (10) dans la direction de leurs extrémités libres diminue simultanément à l'augmentation de leur largeur.

2. Cage selon la revendication 1, **caractérisée en ce que** chacun des flancs (11) est décrit par au moins une arête de corps droite (13), l'arête de corps (13) étant inclinée d'un certain angle par rapport à un plan imaginaire, le plan partant de l'axe de rotation (3) de la cage (1) et étant orienté en l'occurrence dans le même sens que l'axe de rotation (3) dans la direction axiale de la cage (1).

3. Cage selon la revendication 2, **caractérisée en ce que** chacun des flancs (11) est incliné par rapport à une droite imaginaire et coupant en l'occurrence l'axe de rotation (3).

4. Cage selon la revendication 2, **caractérisée en ce que** la distance du côté de la périphérie de deux flancs opposés l'un à l'autre (11) à un nez de retenue (10) augmente avec la diminution de la distance radiale à l'axe de rotation (3).

5. Cage selon la revendication 2, **caractérisée en ce que** les flancs (11) sont des faces planes (13a), les faces (13a) étant inclinées l'une par rapport à l'autre suivant un angle aigu.

6. Cage selon la revendication 1, **caractérisée en ce que** les nez de retenue (10) dépassent de portions de surface (17) sur les nervures (8), les portions de surface (17) étant tournées vers l'axe de rotation (3).

7. Cage selon la revendication 1, **caractérisée en ce que** chacune des cavités de billes (4) présente au moins une paroi latérale (14) avec une épaisseur de paroi approximativement uniforme, les parois latérales (14) étant cintrées depuis les nervures (8), au moins dans la direction axiale.

8. Cage selon la revendication 7, **caractérisée en ce que** les nez de retenue (10) dépassent le plus au maximum dans la direction axiale de la même mesure que les parois latérales (14) dépassent le plus de la nervure (8) dans la direction axiale.

9. Cage selon la revendication 1, **caractérisée en ce que** la cage (1) présente un bord latéral (9) circonférentiel du côté de la périphérie, le bord latéral (9) limitant axialement les cavités de billes (4) par rapport aux parois latérales (14).

10. Cage selon la revendication 9, **caractérisée en ce que** la distance radiale la plus petite du bord latéral (9) à l'axe de rotation (3) de la cage (1) est supérieure à la distance radiale la plus grande des parois latérales (14) à l'axe de rotation (3).
